# EUROPÄISCHE PATENTSCHRIFT

(11) **EP 1 514 342 B1**
(45) Veröffentlichungstag und Bekanntmachung des Hinweises auf die Patenterteilung: **14.11.2007**
(21) Anmeldenummer: 03757042.1
(22) Anmeldetag: 07.06.2003
(51) Int. Cl.: H02P 6/18, H02P 8/32

(54) **VERFAHREN UND SCHALTUNGSANORDNUNG ZUM BETREIBEN VON SCHRITTMOTOREN**
METHOD AND CIRCUIT ARRANGEMENT FOR OPERATING STEPPER MOTORS
PROCEDE ET ENSEMBLE DE CIRCUITS POUR FAIRE FONCTIONNER DES MOTEURS PAS A PAS

(30) Priorität: 07.06.2002 DE 10225610
(43) Veröffentlichungstag der Anmeldung: 16.03.2005
(73) Patentinhaber: Trinamic Motion Control GmbH & Co. KG, 20357 Hamburg (DE)
(72) Erfinder: LARSSON, Lars, 20249 Hamburg (DE)
(74) Vertreter: Heun, Thomas
(86) Internationale Anmeldenummer: PCT/EP2003/006019
(87) Internationale Veröffentlichungsnummer: WO 2003/105332

(56) Entgegenhaltungen:
- US-A- 4 484 124
- US-A1- 2002 043 953
- US-B1- 6 249 094

## Beschreibung

Die Erfindung betrifft ein Verfahren und eine Schaltungsanordnung zum Betreiben von Schrittmotoren oder anderen geeignet dimensionierten Synchronmotoren.

Schrittmotoren lassen sich bekanntlich präzise gesteuert bewegen und gesteuert positionieren. Die Drehstellung eines magnetischen Rotors folgt dabei einem magnetischen Feld, das durch phasenverschobene Bestromung einer Mehrzahl von Spulen erzeugt wird, die um den Rotor angeordnet sind. Wenn ein Schrittmotor nicht nur zur relativen, sondern auch zur absoluten Positionierung eines Gegenstandes dienen soll, so ist zunächst eine Referenzposition zu bestimmen, auf die die absolute Position bezogen werden kann. Eine gesteuerte absolute Positionierung ist dann solange möglich, wie die Steuerung des Schrittmotors unter Berücksichtigung seiner charakteristischen Bewegungsparameter wie Drehwinkel, Geschwindigkeit und Beschleunigung erfolgt.

Zur Bestimmung einer Referenzposition sind im wesentlichen zwei Alternativen bekannt. Dies sind zum einen die mechanische Referenzfahrt, bei der der Motor gegen eine mechanische, als Referenzposition dienende Begrenzung oder einen Anschlag gefahren wird, und zum anderen die elektrische Referenzfahrt, bei der ein Sensor (zum Beispiel ein elektromechanischer Schalter oder eine Lichtschranke) beim Erreichen einer Referenzposition ein entsprechendes Signal erzeugt.

Beide Alternativen haben Vor- und Nachteile. Während bei der mechanischen Referenzfahrt mit Geräuschentwicklung und einem erhöhten Verschleiß durch die mechanische Belastung zu rechnen ist, ist die Realisierung der elektrischen Referenzfahrt aufgrund der Sensoren mit höheren Kosten, einem erhöhten konstruktiven Aufwand für die Integration der Sensoren in ein mechatronisches System sowie mit zusätzlichem Verkabelungsaufwand verbunden, wobei insbesondere unter rauhen Umgebungsbedingungen auch die Zuverlässigkeit der Sensoren selbst ein Problem darstellen kann.

Weiterhin ist zu berücksichtigen, dass durch bestimmte Betriebszustände wie plötzlich auftretende Lastwechsel durch Hindernisse o. ä. im laufenden Betrieb eines Schrittmotors Schrittverluste auftreten können oder der Schrittmotor sogar stehen bleibt, so dass eine erneute Referenzfahrt notwendig wird. Es gibt jedoch Anwendungen, bei denen eine Referenzfahrt im laufenden Betrieb nicht möglich ist, so dass neben der einmaligen Bestimmung der Referenzposition auch eine Überwachung des Betriebszustandes des Schrittmotors im laufenden Betrieb - insbesondere jedoch ohne zusätzliche Sensoren - wünschenswert ist.

Aus der EP 0 182 490 ist ein Verfahren zur Ansteuerung einer Drehdetektor-Schaltungsanordnung bekannt, mit der festgestellt wird, ob ein Treiberimpuls, der in einen Schrittmotor eingespeist wird, bewirkt, dass der Rotor in der richtigen Richtung rotiert. Die Drehdetektion erfolgt im wesentlichen dadurch, dass ein Element hoher bzw. niedriger Impedanz bei Retätigung einer ersten bzw zweiten Schalteinrichtung elektrisch mit einer Wicklung des Motors verbunden wird und dass erste, zweite und dritte Signale in die erste und zweite Schalteinrichtung eingespeist werden, um das Element niedriger Impedanz von der Wicklung zu trennen, während das Element hoher Impedanz zum Zeitpunkt der Drehdetektion mit der Wicklung verbunden wird.

Aus der EP 1 017 159 ist ein Verfahren zur Regelung eines spannungs-/frequenzumrichtergesteuerten Ein- oder Mehrphasen-Elektromotors bekannt, mit dem eine Phasenverschiebung zwischen einer EMF-Spannung und einer BEMF-Spannung anhand der Abweichung zwischen dem Nulldurchgang des Phasenstroms und der durch Eigeninduktion erzeugten Spannung ermittelt und die Frequenz des Umrichters entsprechend nachgeregelt wird. Die Messung der Eigeninduktion erfolgt dabei im Nulldurchgang des Stromverlaufes der zugehörigen Phase, wobei während der Messung die Phase vom Versorgungsnetz getrennt wird.

Der Erfindung liegt demgegenüber die allgemeine Aufgabe zugrunde, ein Verfahren und eine Schaltungsanordnung zum Betreiben eines Schrittmotors (oder eines anderen geeignet dimensionierten Synchronmotors) zu schaffen, mit dem / der in einfacher Weise eine Lasterkennung und damit auch eine Ermittlung einer Referenzposition des Motors möglich ist.

Gelöst wird diese Aufgabe gemäß Anspruch 1 mit Verfahren zum Betreiben von Schrittmotoren mit einer ersten Betriebsart für einen normalen Motorbetrieb, in dem ein Wechselstrom in mindestens eine der Spulen des Schrittmotors eingeprägt wird, sowie einer zweiten Betriebsart zur Ermittlung einer Referenzposition des Schrittmotors anhand einer durch Fahren des Schrittmotors gegen einen mechanischen Anschlag verursachten Lasterhöhung, durch Vergleichen der Höhe eines in der Spule fließenden Messstroms mit mindestens einem unteren Schwellwert, wobei die Höhe des Messstroms im wesentlichen durch die Phase einer durch einen Rotor des Motors in der Spule gegeninduzierte Spannung bestimmt wird, und wobei die Referenzposition festgelegt bzw. definiert wird, wenn der Messstrom kleiner als der untere Schwellwert wird, und wobei die zweite Betriebsart für die Spule innerhalb eines Zeitfensters der ersten Betriebsart entweder dadurch aktiviert wird, dass die Spule kurzgeschlossen wird, wenn sich der in die Spule eingeprägte Wechselstrom an einen Nulldurchgang annähert, oder die Richtung des in die Spule eingeprägten Wechselstroms umgekehrt wird.

Die Aufgabe wird ferner mit einer Schaltungsanordnung zum Betreiben eines Schrittmotors gemäß Anspruch 6 gelöst.

Ein allgemeiner Vorteil dieser Lösungen besteht darin, dass keine Sensoren erforderlich sind und eine relativ einfache und kostengünstige Realisierung möglich ist, insbesondere wenn der Motor durch Pulsweitenmodulation (PWM) einer Spannung angesteuert wird, die einen entsprechenden Strom in die Motorspulen (Spulenstrom) einprägt, da die zur Auswertung des Messstroms (Kurzschlussstrom) erforderlichen Komponenten in einer PWM-Schaltung bereits weitgehend vorhanden sind.

Ein weiterer Vorteil dieser Lösung besteht darin, dass der Beginn des Messstroms (Stromzipfels) aufgrund der Regelung des Spulenstroms (Zielstrom) durch die PWM-Spannung sehr gut reproduzierbar und weitgehend unabhängig von der Höhe dieser Spannung ist. Dadurch ergibt sich eine zumindest weitergehende Unabhängigkeit von Bauteiletoleranzen.

Ferner hat sich gezeigt, dass ein zumindest weitgehend linearer Zusammenhang zwischen der Höhe des Messstroms und der durch eine mechanische Last entzogenen Leistung besteht. Dies bedeutet insbesondere, dass der Messstrom um so kleiner wird, je höher die mechanische Last an dem Motor ist.

Hintergrund ist die Tatsache, dass mit steigender Motorlast und damit steigendem Lastwinkel (Winkel zwischen dem Rotor und der Hauptrichtung des von den Spulen erzeugten magnetischen Feldes) die Phasenverschiebung zwischen dem in die Spule eingeprägten Spulenstrom und der durch den Rotor gegeninduzierten Spannung kleiner wird (und bei stehendem Motor Null ist).

Da die mechanische Leistung des Motors bei konstanter Geschwindigkeit proportional zu der Motorkraft bzw. dem Motordrehmoment ist, stellt die Höhe des Messstroms (Stromzipfel) bei konstanter Geschwindigkeit direkt die Höhe des Drehmomentes der Motorlast und zusammen mit der Drehmomentcharakteristik des betreffenden Motors indirekt den Lastwinkel dar.

Insbesondere kann durch Fahren des Motors gegen einen mechanischen Anschlag und den dadurch veränderten Betriebs- bzw. Lastzustand auch eine Referenzposition des Motors sensorlos erkannt werden. Die mit einer üblichen sensorlosen Bestimmung einer Referenzposition verbundenen Nachteile wie mechanischer Verschleiß und Geräuschentwicklung treten dabei nicht oder in nur wesentlich geringerem Maße in Erscheinung.

Ein Vorteil der oben erläuterten nahezu direkten Last- bzw. Drehmomentmessung besteht bei der (mechanischen) Referenzfahrt darin, dass diese weitgehend unabhängig von dem Elastizitätsmodul des mechanischen Anschlags ist.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnungen. Es zeigt:
- Fig. 1: ein Prinzipschaltbild einer ersten erfindungsgemäßen Schaltungsanordnung;
- Fig. 2: ein erstes Diagramm der Spannungs- und Stromverläufe im Bereich eines Nulldurchgangs des Spulenstroms;
- Fig. 3: ein zweites Diagramm der Spannungs- und Stromverläufe im Bereich eines Nulldurchgangs des Spulenstroms;
- Fig. 4: ein drittes Diagramm der Spannungs- und Stromverläufe im Bereich eines Nulldurchgangs des Spulenstroms; und
- Fig. 5: ein Prinzipschaltbild einer zweiten erfindungsgemäßen Schaltungsanordnung.

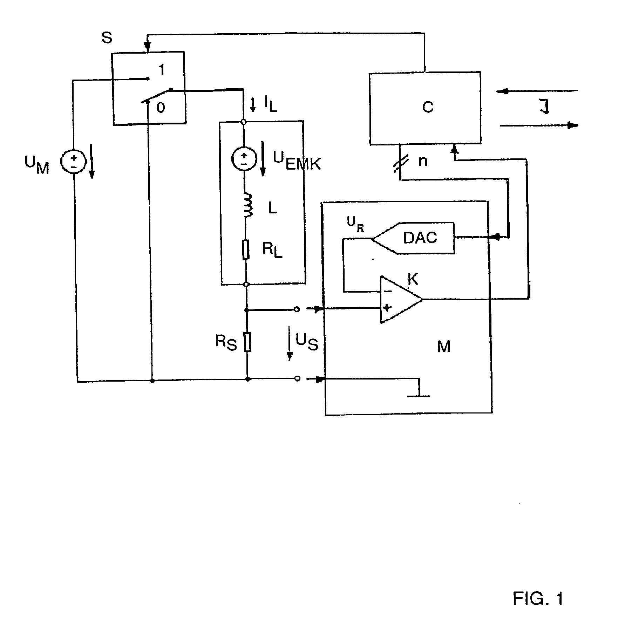

Figur 1 zeigt ein Prinzipschaltbild einer Schaltungsanordnung, die mit einem Schalter S zwischen einer ersten Betriebsart für einen normalen Motorbetrieb (Schalterstellung 1) und einer zweiten Betriebsart zur Erfassung eines Betriebszustandes und insbesondere einer Referenzposition des Motors (Schalterstellung 0) umgeschaltet werden kann, die durch Messung einer mechanischen Lastveränderung beim Fahren des Schrittmotors gegen einen mechanischen Anschlag ermittelt wird.

Der Schrittmotor selbst ist nur in Form einer seiner Spulen L mit einem seriellen Innenwiderstand R_{L} dargestellt, wobei eine Mehrzahl dieser Spulen in bekannter Weise kreisförmig um einen magnetischen Rotor angeordnet ist. Alternativ dazu kann es sich jedoch auch um einen Linear-Schrittmotor handeln.

Parallel zu der Spule L (oder einander zugeordneten Spulengruppen) ist jeweils eine Spannungsquelle zur Erzeugung einer Versorgungsspannung U_{M} (PWM-Spannung) geschaltet, mit der in der ersten Betriebsart ein bestimmter Zielstrom (Spulenstrom) I_{L} in die betreffende(n) Spule(n) L eingeprägt wird. In Serie zu jeder Spule L liegt ferner ein Messwiderstand R_{S}, an dem eine Messspannung U_{S} in Abhängigkeit von einem tatsächlich durch die Spule L fließenden (Mess-) Strom abfällt.

Im Idealfall arbeitet ein solcher Schrittmotortreiber bei hinreichend hoher Versorgungsspannung als quasi ideale Stromquelle, sofern der Stromabbau nicht nur passiv ("Slow Decay"), sondern aktiv ("Fast Decay") stattfindet.

Die Schaltungsanordnung umfasst weiterhin eine Messschaltung M, an deren Eingang die Messspannung U_{S} anliegt und die einen Komparator K zum Vergleichen der Messspannung U_{S} mit einer Vergleichsspannung U_{R} aufweist, sowie einen Digital/Analogwandler DAC zum Erzeugen der Vergleichsspannung aus einem der Messschaltung M zugeführten digitalen Signal. Die Vergleichsspannung U_{R} kann auch in anderer Weise oder in analoger Form zugeführt werden.

Weiterhin ist eine Steuerschaltung C vorgesehen, die das digitale Signal für den Digital/Analogwandler DAC erzeugt und der das Ausgangssignal des Komparators K zugeführt wird. Die Steuerschaltung C kann über ein Interface I angesteuert werden, um in Abhängigkeit von dem Ausgangssignal des Komparators K den Schalter S zwischen seinen beiden Schalterstellungen 0 und 1 umzuschalten beziehungsweise dieses Ausgangssignal einer weiteren Verarbeitung zur Verfügung zu stellen.

Die Messschaltung M sowie die Steuerschaltung C sind im Falle eines durch Pulsweitenmodulation (PWM) gesteuerten Spulenstroms I_{L} im allgemeinen bereits vorhanden, so dass sich die erfindungsgemäße Schaltungsanordnung kostengünstig und mit relativ geringem Zusatzaufwand realisieren lässt.

Im normalen Motorbetrieb (erste Betriebsart) werden in der Schalterstellung 1 die Spulen L phasenverschoben mit Wechselströmen so gespeist, dass in bekannter Weise ein fortschreitendes Magnetfeld entsteht, dem der magnetische Rotor schrittweise oder quasi-kontinuierlich in Mikroschritten folgt.

Um einen definierten Zielstrom I_{L} in die Spule L einzuprägen (Spulenstrom), kann die an dem Messwiderstand R_{S} abfallende Messspannung U_{S} ausgewertet und in bekannter Weise zur Steuerung bzw. Regelung der die Versorgungsspannung U_{M} erzeugenden Spannungsquelle verwendet werden.

Durch die Bewegung des Rotors und die dadurch verursachte magnetische Flussänderung wird in der Spule L eine elektrische Spannung U_{EMK} (gegen-) induziert, die der Versorgungsspannung U_{M} entgegenwirkt und hinsichtlich ihres Verlaufes im wesentlichen von der Geschwindigkeit des Rotors und dessen momentaner Position relativ zu der Spule abhängig ist. Im Schaltbild der Figur 1 ist diese Spannung durch eine in Serie zu der Spule L geschaltete Spannungsquelle dargestellt, die die Spannung U_{EMK} erzeugt.

Ohne mechanische Last (das heißt bei einem Lastwinkel von im wesentlichen 0° und einem idealisierten Innenwiderstand R_{L} der Spule von 0 Ohm) ist die Spannung U_{L} über den Klemmen der Spule L gegenüber dem eingeprägten Spulenstrom I_{L} um 90° phasenverschoben (d. h. bei einer Wirkleistung von Null). Die über eine Periode gemittelte elektrische Leistung ist dann gleich Null. Mit steigendem Lastwinkel vermindert sich diese Phasenverschiebung zwischen der Spannung U_{L} und dem Spulenstrom I_{L}. Bei maximalem Lastwinkel (das heißt kurz vor einem Schrittverlust) ist die Phasenverschiebung schließlich im wesentlichen Null und die Leistung ist maximal.

Bei einem mechanisch unbelasteten Schrittmotor, der mit sinus- und cosinusförmigen Spulenströmen I_{L} konstanter Frequenz gespeist wird, sind die gegeninduzierten Spannungen U_{EMK} im Idealfall ebenfalls sinus- und cosinusförmig und gegenüber den Spulenströmen I_{L} in den betreffenden Spulen L um 90° in der Phase verschoben. Phasenverschiebungen konstanter Art und andere Verläufe der Spannungen U_{EMK} können jedoch durch die Bauart des Motors und insbesondere die geometrische Form des Rotors und des Stators sowie deren Magnetisierung verursacht werden.

Weiterhin treten insbesondere bei einer mechanischen Belastung des Motors verminderte Phasenverschiebungen zwischen der Spannung U_{EMK} und dem Spulenstrom I_{L} durch einen von Null verschiedenen Lastwinkel (Winkel zwischen dem Rotor und der Hauptrichtung des magnetischen Feldes) auf.

Wenn der Schrittmotor über eine Grenze hinaus mechanisch belastet wird, so kann er darüberhinaus um ein oder mehrere ganzzahlige Vielfache der Stromperiode (vier Vollschritte bei einem 2-Phasen-Schrittmotor) springen und auf diese Weise Schritte verlieren. Dabei tritt zwischen dem Spulenstrom I_{L} und der gegeninduzierten Spannung U_{EMK} ebenfalls eine Phasenverschiebung auf, wobei sich auch der Verlauf der Spannung U_{EMK} aufgrund der Sprünge erheblich verändern kann. Die Phase der gegeninduzierten Spannung U_{EMK} repräsentiert somit im wesentlichen die Rotorposition.

Der zeitliche Verlauf des Zielstroms I_{L} durch die Spulen L ist nicht zwingend sinus- und cosinusförmig. In Abhängigkeit von dem Typ des Schrittmotors kann mit trapez- oder dreieckförmigen Bestromungsmustern oder Mischformen davon ein besseres Laufverhalten erzielt werden.

In einer zweiten Betriebsart eignet sich die gegeninduzierte Spannung U_{EMK} grundsätzlich jedoch trotzdem zur Bestimmung der oben erläuterten Bewegungs- und Lastzustände des Schrittmotors, d. h. seines Betriebszustandes, und damit auch zur Detektion eines mechanischen Anschlages zum Beispiel an einer Referenzposition, da die Höhe der Spannung U_{EMK} und die Phasenlage zum Spulenstrom I_{L} neben der Geschwindigkeit des Rotors insbesondere von dem Lastwinkel des Rotors und damit dem Lastzustand des Motors abhängig ist.

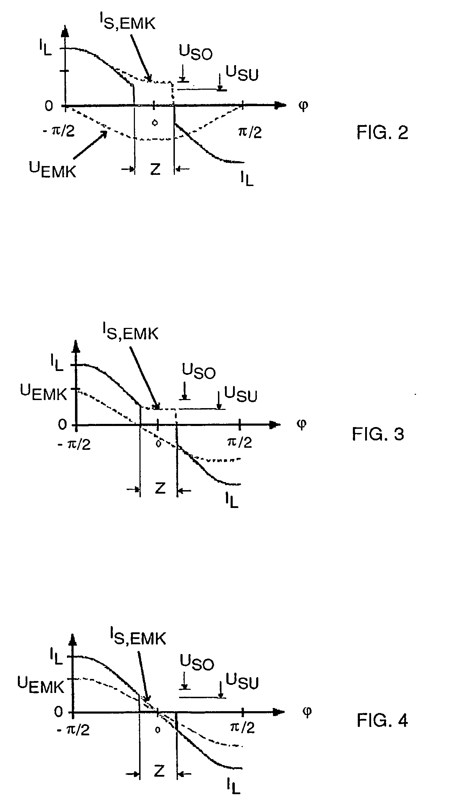

Im einzelnen ist die Amplitude der gegeninduzierten Spannung U_{EMK} proportional zu der Geschwindigkeit des Rotors. Die Phase dieser Spannung U_{EMK} relativ zu dem eingeprägten Spulenstrom I_{L} wird im wesentlichen durch die mechanische Last bestimmt. Bei einer maximal möglichen Last vermindert sich diese Phasenverschiebung im wesentlichen auf den Wert 0. Dies wird aus den Figuren 2 bis 4 deutlich und wird später noch genauer erläutert.

Die Spannung U_{EMK} könnte bei einer nicht bestromten Spule L direkt über den Klemmen der Spule gemessen werden. Da jedoch eine solche Spule L keinen Beitrag zum Drehmoment des Motors leistet, ist diese Art der Erfassung nicht wünschenswert. Auch ein schneller Wechsel zwischen bestromtem und nicht bestromtem Zustand ist aufgrund der dabei auftretenden, relativ hohen Induktionsspannungen nicht wünschenswert.

Erfindungsgemäß wird deshalb die gegeninduzierte Spannung U_{EMK} in der zweiten Betriebsart durch Trennen der Spule von der Versorgungsspannung U_{M} und Kurzschließen der Spule ermittelt, und zwar jeweils periodisch innerhalb von solchen Zeitfenstern, in denen der in die betreffende Spule L eingeprägte Strom I_{L} relativ gering ist, das heißt kurz vor und nach dem Polaritätswechsel dieses Stroms bzw. der diesen einprägenden Versorgungsspannung U_{M}.

Zu diesem Zweck wird der Schalters S in die Schalterstellung 0 umgeschaltet.

Der Beginn der Zeitfenster braucht dabei nicht durch Überwachung der Messspannung U_{S} und Vergleich mit einer Vergleichsspannung bestimmt zu werden. Vielmehr ist der Beginn und die Länge der Zeitfenster durch den bekannten bzw. festgelegten Verlauf der Versorgungsspannung U_{M} bzw. den Verlauf des in die betreffende Spule eingeprägten Stroms I_{L} gegeben, so dass die Steuerschaltung C zum Umschalten des Schalters S direkt über das Interface I entsprechend angesteuert werden kann.

Die gegeninduzierte Spannung U_{EMK} treibt in dem dadurch kurzgeschlossenen Spulenkreis nun einen Messstrom I_{S,EMK} (Stromzipfel), der an dem Messwiderstand R_{S} einen entsprechenden Spannungsabfall U_{S,EMK} erzeugt.

Diese Spannung U_{S,EMK} wird wiederum mit der Messschaltung M ausgewertet, um den Betriebszustand des Motors zu ermitteln und festzustellen, ob der Motor unter einer mehr oder weniger hohen mechanischen Last oder sogar gegen einen mechanischen Anschlag läuft, um ihn gegebenfalls zur Vermeidung eines Verschleißes sofort abzuschalten.

Dazu wird die Spannung U_{S,EMK} in dem Komparator K mit verschiedenen Schwellwerten U_{SO}, U_{SU} verglichen, die in Abhängigkeit von der Drehgeschwindigkeit des Motors festgelegt und als digitale Werte über das Interface I und die Steuerschaltung C dem Digital/Analogwandler DAC (oder auch analog) zugeführt werden.

Diese Auswertung soll anhand der Diagramme der Figuren 2 bis 4 erläutert werden. Dabei bezeichnet die vertikale Achse die Höhe des Stroms bzw. der Spannung, während auf der horizontalen Achse die Periodendauer aufgetragen ist.

Der in der Umgebung des Zeitfensters Z (U_{M} = 0) durch die Spule L fließende Spulenstrom I_{L} ist jeweils mit einer durchgezogenen Linie dargestellt. Dieser Spulenstrom I_{L} ist innerhalb des Zeitfensters Z, in dem der Spulenkreis durch Umschalten des Schalters S in die Schalterstellung 0 kurzgeschlossen ist, Null. Stattdessen fließt innerhalb des Zeitfensters Z im wesentlichen ein durch die gegeninduzierte Spannung U_{EMK} hervorgerufener Messstrom I_{S,EMK} (gestrichelt dargestellt, Stromzipfel), durch den an dem Messwiderstand R_{S} eine Messspannung U_{S,EMK} abfällt.

Weiterhin ist in diese Diagramme mit einer gestrichelten Linie auch der Verlauf der gegeninduzierten Spannung U_{EMK} eingetragen.

Figur 2 zeigt die Verläufe dieser Ströme und Spannungen für einen im wesentlichen unbelasteten Zustand, das heißt bei einem minimalen Lastwinkel, während in Figur 3 die Verläufe bei einer mittleren Last und einem mittleren Lastwinkel dargestellt sind. Figur 4 zeigt schließlich die Verläufe der Ströme und Spannungen bei einer maximalen Last und einem maximalen Lastwinkel.

Wie bereits erläutert wurde, vermindert sich mit zunehmender Last die Phasenverschiebung zwischen dem Spulenstrom I_{L} bzw. - während der zweiten Betriebsart - zwischen dem Messstrom I_{S,EMK} durch die Spule L und der gegeninduzierten Spannung U_{EMK}.

Der Vollständigkeit halber sei erwähnt, dass sich, wie allgemein bekannt, die gegeninduzierte Spannung U_{EMK} hinsichtlich ihrer Polarität gegenphasig zu der Versorgungsspannung U_{M} verhält.

Die Höhe des innerhalb des Zeitfensters Z fließenden Messtroms I_{S,EMK} (Stromzipfel) und somit die Höhe der durch diesen innerhalb des Zeitfensters Z erzeugten Messspannung U_{S,EMK} ist von der Drehgeschwindigkeit und dem durch eine Last verursachten Lastwinkel des Motors abhängig und repräsentiert somit auch die aufgenommene Wirkleistung.

Eine Laständerung führt dabei zu einer Phasenverschiebung der gegeninduzierten Spannung U_{EMK} und somit zu einer Änderung des von dieser in dem Spulenkreis getriebenen Stroms. Diese Änderung hat wiederum eine Änderung des innerhalb des Zeitfensters Z fließenden Messstroms I_{S,EMK} (Stromzipfel) zur Folge, die durch Auswertung der Messspannung U_{S,EMK} erfasst wird.

Somit kann durch einen Vergleich der Messspannungen U_{S,EMK} in aufeinanderfolgenden Zeitfenstern Z eine Änderung der Last des Motors erkannt werden. Insbesondere ist es möglich, die beim Fahren gegen einen mechanischen Anschlag auftretende Laständerung zu erkennen und auf diese Weise eine Referenzposition festzulegen bzw. zu definieren.

Laständerungen werden vorzugsweise durch einen Vergleich der Messspannung U_{S,EMK} innerhalb der Zeitfenster Z mit Schwellwerten erkannt, die in Abhängigkeit von der Geschwindigkeit des Motors festgelegt werden.

So sind zum Beispiel gemäß den Figuren 2 bis 4 ein oberer und ein unterer Schwellwert U_{SO}, U_{SU} für die Messspannung U_{S,EMK} so festgelegt, dass bei einer bestimmten Geschwindigkeit und relativ geringer Last des Motors die Messspannung U_{S,EMK} größer ist, als der obere Schwellwert U_{SO}, während bei einer mechanischen Lasterhöhung, die durch ein Fahren gegen einen mechanischen Anschlag verursacht wird, die Messspannung U_{S,EMK} unter dem unteren Schwellwert U_{SU} liegt.

Figur 2 zeigt den Fall, bei dem innerhalb des Zeitfensters Z ein Messstrom I_{S,EMK} durch die Spule fließt, durch den eine Messspannung U_{S,EMK} erzeugt wird, die dem oberen Schwellwert U_{SO} entspricht.

Gemäß Figur 3 fließt ein Messstrom I_{S,EMK} durch die Spule, durch den eine Messspannung U_{S,EMK} abfällt, die dem unteren Schwellwert U_{SU} entspricht.

Gemäß Figur 4 ist die Last schließlich so groß, dass der Messstrom I_{S,EMK} und damit auch der Spannungsabfall U_{S,EMK} im wesentlichen Null ist.

Mit der Messschaltung gemäß Figur 1 wird somit die Messspannung U_{S,EMK} innerhalb eines Zeitfensters Z mit den beiden Schwellwerten U_{SO}, U_{SU} verglichen, wobei die Messspannung an einem Eingang des Komparators K und jeweils ein Schwellwert an dem anderen Eingang des Komparators K anliegt. Die Schwellwerte U_{SO}, U_{SU} werden über das Interface I und die Steuerschaltung C dem Digital/Analogwandler DAC zugeführt.

Wenn die Messspannung U_{S,EMK} kleiner ist, als der untere Schwellwert U_{SU}, so wird über die Steuereinheit C und das Interface I ein Signal erzeugt, mit dem das Erreichen einer Referenzposition an einem mechanischen Anschlag angezeigt wird.

Wenn die Messspannung U_{S,EMK} zwischen den beiden Schwellwerten U_{SO}, U_{SU} liegt, so kann in entsprechender Weise ein Signal erzeugt werden, mit dem eine erhöhte Motorlast angezeigt wird.

Wenn schließlich die Messspannung U_{S,EMK} größer ist, als der obere Schwellwert U_{SO}, so kann ein Signal erzeugt werden, mit dem angezeigt wird, dass der Motor mit relativ geringer Last läuft.

Für die Realisierung der Erfindung ist als Randbedingungen zu fordern, dass der Innenwiderstand R_{L} der betreffenden Spulen L in der Größenordnung des Messwiderstandes R_{S} liegt, damit die Messspannung U_{S,EMK} bei der Lastmessung hinreichend groß, das heißt im Bereich der Messspannung U_{S} im Normalbetrieb liegt. Sofern ein umschaltbarer Messwiderstand R_{S} vorgesehen ist, kann die erfindungsgemäße Lösung auch bei hochohmigen Motoren angewendet werden. Wenn hingegen R_{L} >> R_{S} ist, so sollte die Messschaltung M eine ausreichend hohe Verstärkung aufweisen.

Besondere Vorteile der Erfindung bestehen darin, dass die Messspannung U_{S,EMK} unabhängig von der Versorgungsspannung U_{M} ist, da sie während eines Zeitfensters erfasst wird, in dem die Versorgungsspannung (PWM) nicht anliegt. Die durch das Kurzschließen des Spulenkreises entstehende Stromschleife ist niederohmig, so dass die Messspannung U_{S,EMK} relativ unempfindlich gegen Störungen ist. Außerdem bewirkt der Messwiderstand R_{S} bei kurzgeschlossenem Spulenkreis eine Strombegrenzung.

Aufgrund der Regelung des Spulenstroms I_{L} während der ersten Betriebsart (Normalbetrieb) werden für die Messung der Höhe des Messstroms I_{S,EMK} (Stromzipfel) während der zweiten Betriebsart besonders gut reproduzierbare Verhältnisse geschaffen. Wenn hingegen der Schrittmotor an einer Spannungsquelle betrieben werden würde, so wäre die Höhe des Stromzipfels von der Höhe der Versorgungsspannung abhängig, was entsprechend zu berücksichtigen wäre.

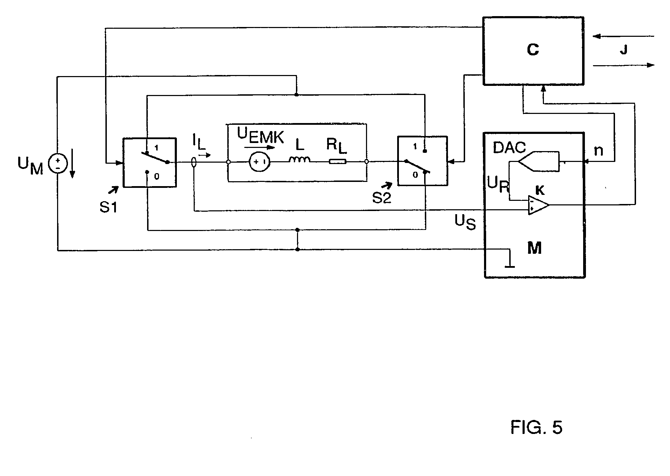

Figur 5 zeigt schließlich ein Prinzipschaltbild einer zweiten erfindungsgemäßen Schaltungsanordnung, in der gleiche bzw. einander entsprechende Komponenten wie in Figur 1 mit den gleichen Bezeichnungen versehen sind.

Im Unterschied zur Ausführung gemäß Figur 1 kann hier die PWM-Versorgungsspannung U_{M} mittels eines ersten und eines zweiten Schalters S1, S2, die durch die Steuerschaltung C geschaltet werden, umgepolt werden. Die zweite Betriebsart, während der der durch die gegendinduzierte Spannung U_{EMK} erzeugte Messstrom I_{S,EMK} erfasst und gemäß obiger Erläuterung ausgewertet wird, wird in diesem Fall unmittelbar nach dem Umpolen der PWM-Versorgungsspannung, das heißt unmittelbar nach dem Umschalten der beiden Schalter S1, S2 aktiviert, wobei zuvor der Messstrom nicht weggeregelt werden darf (Slow-Decay-Betriebsart).

Weiterhin ist in dieser Ausführung angedeutet, dass die an den Komparator geführte Messspannung nicht zwangsläufig durch einen Spannungsabfall mittels eines Widerstandes R_{S} erzeugt werden muss. Vielmehr können auch Hall-Sensoren, Stromteiler in MOSFET-Schaltern oder andere Elemente, ggf. an anderen Stellen der Schaltungsanordnung, verwendet werden, mit denen ein zu dem Messstrom durch die Spule L proportionales Signal erzeugt wird, das mit den entsprechenden Schwellwerten verglichen werden kann.

Wie bereits erläutert wurde, kann mit den dargestellten Schaltungsanordnungen nicht nur ein mechanischer Anschlag, sondern auch eine Last und gegebenenfalls ein plötzlich auftretendes Hindernis erkannt werden, so dass eine Überwachung des Fahrbetriebes des Motors möglich ist. Ebenso ist eine Lastwinkelmessung prinzipiell möglich.

Im Gegensatz zu zahlreichen bekannten Möglichkeiten zur Anschlagerkennung ist es hier nicht erforderlich, dass der Motor zurückspringt.

Durch den im Bereich des Nulldurchgangs der Versorgungsspannung bzw. des eingeprägten Spulenstroms kurzgeschlossenen Spulenkreis werden auch eventuelle Resonanzschwingungen (vergleichbar mit dem Prinzip der Wirbelstrombremse) bedämpft.

Die Phasenverschiebung sowie die Amplitudenabsenkung des periodischen Spulenstroms I_{L} reagieren sehr empfindlich auf eine Lastveränderung, gleichzeitig sind beide Größen jedoch sehr unempfindlich gegenüber anderen Störungen, die damit nicht in Zusammenhang stehen, wie zum Beispiel die Einstrahlung elektrischer Energie. Dadurch ist eine sehr genaue Erfassung auch geringer Lastveränderungen möglich. Darüberhinaus glättet die Spule in dem Spulenkreis eventuelle elektrische Störungen, so dass deren Einfluss weiter vermindert wird.

Die Messbedingungen sind innerhalb der Zeitfenster Z sehr gut definiert und somit sehr gut reproduzierbar. Der innerhalb des Zeitfensters Z fließende Strom I_{S,EMK} ist nur abhängig von der Drehgeschwindigkeit des Motors, dem Lastwinkel sowie von Motorkonstanten, jedoch nicht oder nur sehr geringfügig abhängig von Parametern, die driften oder aufgrund von Exemplarstreuungen variieren.

Abschließend sei darauf hingewiesen, dass das erfindungsgemäße Verfahren und die erfindungsgemäße Schaltungsanordnung auch zur Anwendung mit anderen Synchronmotoren geeignet ist, sofern diese so dimensioniert sind, dass zumindest einer der Spulenkreise kurzgeschlossen werden kann.

## Patentansprüche

1. Verfahren zum Betreiben von Schrittmotoren,
mit einer ersten Betriebsart für einen normalen Motorbetrieb, in dem ein Wechselstrom (I_{L}) in mindestens eine der Spulen (L) des Schrittmotors eingeprägt wird, sowie einer zweiten Betriebsart zur Ermittlung einer Referenzposition des Schrittmotors anhand einer durch Fahren des Schrittmotors gegen einen mechanischen Anschlag verursachten Lasterhöhung, durch Vergleichen der Höhe eines in der Spule (L) fließenden Messstroms (I_{S,EMK}) mit mindestens einem unteren Schwellwert, wobei die Höhe des Messstroms (I_{S,EMK}) im wesentlichen durch die Phase einer durch einen Rotor des Motors in der Spule (L) gegeninduzierte Spannung (U_{EMK}) bestimmt wird, und wobei die Referenzposition festgelegt bzw. definiert wird, wenn der Messstrom (I_{S,EMK}) kleiner als der untere Schwellwert wird, und wobei die zweite Betriebsart für die Spule (L) innerhalb eines Zeitfensters (Z) der ersten Betriebsart entweder dadurch aktiviert wird, dass die Spule (L) kurzgeschlossen wird, wenn sich der in die Spule (L) eingeprägte Wechselstrom (I_{L}) an einen Nulldurchgang annähert, oder die Richtung des in die Spule eingeprägten Wechselstroms (I_{L}) umgekehrt wird.

2. Verfahren nach Anspruch 1,
bei dem die Höhe des in der zweiten Betriebsart durch die Spule (L) fließenden Messstroms (I_{S,EMK}) mit mindestens einem in Abhängigkeit von der Geschwindigkeit des Motors festgelegten oberen Schwellwert verglichen wird, der größer als der untere Schwellwert ist, um einen geringen Lastzustand des Motors festzustellen, wenn der Messstroms (I_{S,EMK}) größer als der obere Schwellwert ist.

3. Verfahren nach Anspruch 1,
bei dem der untere Schwellwert in Abhängigkeit von der Geschwindigkeit des Motors festgelegt wird, um einen hohen Lastzustand festzustellen, wenn der Messstroms (I_{S,EMK}) kleiner als der untere Schwellwert ist.

4. Verfahren nach Anspruch 1,
bei dem das Zeitfenster (Z) für die zweite Betriebsart so in die erste Betriebsart eingebettet ist, dass es im wesentlichen symmetrisch zu einem Nulldurchgang des in der ersten Betriebsart in die betreffende Spule (L) eingeprägten Wechselstroms (I_{L}) liegt.

5. Verfahren nach Anspruch 1 oder 2,
bei dem die Höhe des in der kurzgeschlossenen Spule (L) fließenden Messstroms (I_{S,EMK}) über einen Spannungsabfall (U_{S,EMK}) an einem Messwiderstand (R_{S}) erfasst und mit Schwellwerten in form von Spannungen (U_{SO}, U_{SU}) verglichen wird.

6. Schaltungsanordnung zum Betreiben von Schrittmotoren,
insbesondere nach einem Verfahren nach einem der vorhergehenden Ansprüche, mit einer Einrichtung (S; M, R_{S}; C) zur Ermittlung einer Referenzposition des Schrittmotors anhand einer durch Fahren des Schrittmotors gegen einen mechanischen Anschlag verursachten Lasterhöhung, mit einer Messschaltung (M) zum Vergleichen der Höhe eines in einer Spule (L) des Motors fließenden Messstroms (I_{S,EMK}), wobei die Höhe im wesentlichen durch die Phase einer durch einen Rotor des Motors in der Spule (L) gegeninduzierte Spannung (U_{EMK}) bestimmt wird, mit mindestens einem unteren Schwellwert, wenn entweder sich der im normalen Motorbetrieb in die Spule (L) eingeprägte Wechselstrom (I_{L}) an einen Nulldurchgang annähert und die Spule (L) kurzgeschlossen ist oder die Richtung des Wechselstroms (I_{L}) umgekehrt wird.

7. Schaltungsanordnung nach Anspruch 6,
bei der die Einrichtung (S; M, R_{S}; C) einen Messwiderstand (R_{S}) und die Messschaltung (M) einen Komparator (K) zum Vergleichen einer an dem Messwiderstand (R_{S}) durch den Messstrom (I_{S,EMK}) abfallenden Messspannung (U_{S,EMK}) mit dem mindestens einen unteren Schwellwert (U_{SU}) aufweist.

8. Schaltungsanordnung nach Anspruch 7,
bei der die Einrichtung (S; M, R_{S}; C) eine Steuerschaltung (C) und die Messschaltung (M) einen Digitat/Analog-Wandler (DAC) aufweist, dessen Eingang mit einem Ausgang der Steuerschaltung (C) und dessen Ausgang mit einem Eingang des Komparators (K) zum Anlegen des mindestens einen unteren und eines oberen Schwellwertes (U_{SU}, U_{SO}) verbunden ist, wobei die Schwellwerte in Abhängigkeit von der Drehgeschwindigkeit des Motors festgelegt und durch die Steuerschaltung (C) zugeführt werden, um durch einen Vergleich der Messspannung (U_{S,EMK}) mit den Schwellwerten einen Betriebs- bzw. Lastzustand zu erfassen.

9. Schaltungsanordnung nach Anspruch 8,
bei der die Steuerschaltung (C) zum Ansteuern eines Schalters (S) zum periodischen Umschalten zwischen der ersten und der zweiten Betriebsart in Abhängigkeit von der Frequenz des in die Spule eingeprägten Wechselstroms (I_{L}) vorgesehen ist.

10. Computerprogramm mit Programmcodemitteln zur Durchführung des Verfahrens nach einem der Ansprüche 1 bis 5, wenn das Programm auf einem Mikrocomputer ausgeführt wird.

## Claims

1. Method for operating a stepper motor,
comprising a first mode of operation for a normal motor operation in which an alternating current (I_{L}) is impressed into at least one of the coils (L) of the stepper motor, and a second mode of operation for determining a reference position of the stepper motor on the basis of an increase of the load which is caused by driving the stepper motor against a mechanical stop, by comparing the level of a measuring current (I_{S,EMK}) which flows in the coil (L), with at least one lower threshold value, wherein the level of the measuring current (I_{S,EMK}) is substantially determined by the phase of a voltage (U_{EMK}) which is counter-induced by a rotor of the motor in the coil (L), and wherein the reference position is set and defined, respectively, when the measuring current (I_{S,EMK}) is lower than the lower threshold value, and wherein the second mode of operation for the coil (L) is activated during a time window (Z) of the first mode of operation either by short-circuiting the coil (L) when the alternating current (I_{L}) which is impressed into the coil (L) is approaching a zero crossing, or when the direction of the alternating current (I_{L}) which is impressed into the coil is reversed.

2. Method according to claim 1,
in which the level of the measuring current (I_{S,EMK}) which during the second mode of operation flows through the coil (L) is compared with at least one upper threshold value which is set in dependence on the velocity of the motor, which upper threshold value is higher than the lower threshold value, in order to detect a low load condition of the motor, when the measuring current (I_{S,EMK}) is higher than the upper threshold value.

3. Method according to claim 1,
in which the lower threshold value is set in dependence on the velocity of the motor in order to detect a high load condition, when the measuring current (I_{S,EMK}) is smaller than the lower threshold value.

4. Method according to claim 1,
in which the time window (Z) for the second mode of operation is embedded into the first mode of operation such that it is positioned substantially symmetrically to a zero crossing of the alternating current (I_{L}) which during the first mode of operation is impressed into the related coil (L).

5. Method according to claim 1 or 2,
in which the level of the measuring current (I_{S,EMK}) which flows through the short circuited coil (L) is detected by a voltage drop (U_{S,EMK}) over a measuring resistance (R_{S}) and is compared with threshold values in the form of voltages (U_{SO}, U_{SU}).

6. Circuit arrangement for operating a stepper motor,
especially according to a method according to one of the preceding claims, comprising a device (S; M, R_{S}; C) for determining a reference position of the stepper motor on the basis of an increase of the load which is caused by driving the stepper motor against a mechanical stop, with a measuring circuit (M) for comparing the level of a measuring current (I_{S,EMK}) flowing in a coil (L) of the motor, wherein the level is determined substantially by the phase of a voltage (U_{EMK}) which is counter-induced by a rotor of the motor in the coil (L), with at least one lower threshold value, when either the alternating current (I_{L}) which is impressed into the coil (L) during the normal mode of operation is approaching a zero crossing and the coil (L) is short circuited, or when the direction of the alternating current (I_{L}) reverses.

7. Circuit arrangement according to claim 6,
in which the device (S; M, R_{S}; C) comprises a measuring resistance (R_{S}), and in which the measuring circuit (M) comprises a comparator (K) for comparing a measuring voltage (U_{S,EMK}) which drops at the measuring resistance (R_{S}) by the measuring current (I_{S,EMK}), with the at least one lower threshold value (U_{SU}).

8. Circuit arrangement according to claim 7,
in which the device (S; M, R_{S}; C) comprises a control circuit (C), and in which the measuring circuit (M) comprises a digital-to-analog converter (DAC) with an input which is connected with an output of the control circuit (C), and with an output which is connected with an input of the comparator (K) for applying the at least one lower and an upper threshold value (U_{SU}, U_{SO}), wherein the threshold values are set in dependence on the rotating velocity of the motor and are provided by the control circuit (C), in order to detect an operating and load condition, respectively, by comparing the measuring voltage (U_{S,EMK}) with the threshold values.

9. Circuit arrangement according to claim 8,
in which the control circuit (C) is provided for controlling a switch (S) for periodically switching-over between the first and the second mode of operation in dependence on the frequency of the alternating current (I_{L}) which is impressed into the coil.

10. Computer program comprising computer program code means for conducting a method according to one of claims 1 to 5, when the program is run on a microcomputer.

## Revendications

1. Procédé pour faire fonctionner le un moteur pas-à-pas,
comprenant un premier mode de fonctionnement pour le fonctionnement normal d'un moteur dans lequel un courant alternatif (I_{L}) est appliqué sur au moins une des bobines (L) du moteur pas-à-pas, et un deuxième mode de fonctionnement pour la détermination d'une position de référence du moteur pas-à-pas sur la base d'une augmentation de la charge provoquée par l'entrainement du moteur pas-à-pas contre un arrêt mécanique, en comparant le niveau d'un courant de mesure (I_{S,EMK}) qui circule dans la bobine (L), avec au moins une valeur de seuil plus faible; le niveau du courant de mesure (I_{S,EMK}) étant essentiellement déterminé par la phase d'une tension (U_{EMK}) qui est contre-induite par un rotor d'un moteur dans la bobine (L), et où la position de référence est réglée et définie, respectivement, lorsque le courant de mesure (I_{S,EMK}) est inférieur à la valeur de seuil plus faible, et où le deuxième mode de fonctionnement pour la bobine (L) est activé pendant une fenêtre de temps (Z) du premier mode de fonctionnement, soit en court-circuitant la bobine (L) lorsque le courant alternatif (I_{L}) appliqué sur la bobine (L) se rapproche du passage par zéro, ou lorsque la direction du courant alternatif (I_{L}) appliqué sur la bobine est inversée.

2. Procédé selon la revendication 1,
dans lequel le niveau du courant de mesure (I_{S,EMK}) circulant à travers la bobine (L) pendant le deuxième mode de fonctionnement, est comparé avec au moins une valeur de seuil supérieure qui est fixée en liaison avec la vitesse du moteur, laquelle valeur de seuil supérieure est plus élevée que la valeur de seuil plus faible afin de détecter un état de charge faible du moteur lorsque le courant de mesure (I_{S,EMK}) est plus élevé que la valeur de seuil supérieure.

3. Procédé selon la revendication 1,
dans lequel la valeur de seuil plus faible est fixée en liaison avec la vitesse du moteur afin de détecter un état de charge élevée, lorsque le courant de mesure (I_{S,EMK}) est inférieur à la valeur de seuil plus faible.

4. Procédé selon la revendication 1,
dans lequel la fenêtre de temps (Z) pour le deuxième mode de fonctionnement est incorporé dans le premier mode de fonctionnement pour être positionnée essentiellement de manière symétrique à un passage à zéro du courant alternatif (I_{L}) appliqué sur la bobine (L) concernée pendant le premier mode de fonctionnement.

5. Procédé selon la revendication 1 ou 2,
dans lequel le niveau du courant de mesure (I_{S,EMK}) circulant à travers la bobine (L) court-circuitée, est détecté par une chute de tension (U_{S,EMK}) sur une résistance de mesure (R_{S}) et lequel courant de mesure est comparé avec les valeurs de seuil sous la forme de tensions (U_{SO}, U_{SU}).

6. Ensemble de circuits pour faire fonctionner un moteur pas-à-pas,
notamment selon un procédé conforme à une des revendications précédentes, comprenant un dispositif (S; M, R_{S}; C) pour la détermination d'une position de référence du moteur pas-à-pas sur la base d'une augmentation de la charge provoquée par l'entrainement du moteur pas-à-pas contre un arrêt mécanique à l'aide d'un circuit de mesure (M) destiné à comparer le niveau d'un courant de mesure (I_{S,EMK}) circulant dans une bobine (L) du moteur; le niveau étant déterminé essentiellement par la phase d'une tension (U_{EMK}) qui est contre-induite par un rotor du moteur dans la bobine (L), avec au moins une valeur de seuil inférieure, lorsque le courant alternatif (I_{L}) appliqué sur la bobine (L) pendant le mode de fonctionnement normal s'approche du passage à zéro et que la bobine (L) est court-circuitée, ou lorsque la direction du courant alternatif (I_{L}) est inversée.

7. Ensemble de circuits selon la revendication 6,
dans lequel le dispositif (S; M, R_{S}; C) comprend une résistance de mesure (R_{S}), et dans lequel le circuit de mesure (M) comprend un comparateur (K) destiné à comparer une tension de mesure (U_{S,EMK}) qui a chuté à la résistance de mesure (R_{S}) par le courant de mesure (I_{S,EMK}) avec au moins une valeur de seuil (U_{SU}) plus faible.

8. Disposition en circuit selon la revendication 7,
dans lequel le dispositif (S; M, R_{S}; C) comprend un circuit de contrôle (C), et dans lequel le circuit de mesure (M) comprend un convertisseur numérique-analogique (CNA) avec une entrée reliée à une sortie du circuit de contrôle (C), et avec une sortie reliée à une entrée du comparateur (K) afin d'appliquer au moins une valeur de seuil plus faible ou supérieure (U_{SU}, U_{SO}); où les valeurs de seuil sont fixées en liaison avec la vitesse de rotation du moteur et fournies par le circuit de contrôle (C) afin de détecter un état de fonctionnement et de charge, respectivement, en comparant la tension de mesure (U_{S,EMK}) avec les valeurs de seuil.

9. Ensemble de circuits selon la revendication 8,
dans lequel on a prévu le circuit de contrôle (C) pour contrôler un commutateur (S) destiné à commuter entre le premier et le deuxième mode de fonctionnement en liaison avec la fréquence du courant alternatif (I_{L}) appliqué sur la bobine.

10. Un programme informatique comprenant des moyens de code de programmes d'ordinateur destinés à conduire un procédé selon une des revendications 1 à 5, lorsque le programme est lancé sur un micro-ordinateur.
